# EUROPÄISCHE PATENTSCHRIFT

(11) **EP 0 725 839 B1**
(45) Veröffentlichungstag und Bekanntmachung des Hinweises auf die Patenterteilung: **20.05.1998**
(21) Anmeldenummer: 94930162.6
(22) Anmeldetag: 12.10.1994
(51) Int. Cl.: C21D 9/67, C21D 1/767

(54) **VERFAHREN ZUM GLÜHEN VON GLÜHGUT SOWIE ZUGEHÖRIGER GLÜHOFEN**
PROCESS FOR ANNEALING ITEMS AND SUITABLE ANNEALING FURNACE
PROCEDE DE RECUIT D'UN PRODUIT A RECUIRE ET FOUR ASSOCIE

(30) Priorität: 28.10.1993 DE 4336771
(43) Veröffentlichungstag der Anmeldung: 14.08.1996
(73) Patentinhaber: LOI Thermprocess GmbH, D-45138 Essen (DE)
(72) Erfinder: SCHEUERMANN, Walter, D-53228 Bonn (DE)
(74) Vertreter: Harlacher, Mechthild, Dipl.-Ing.
(86) Internationale Anmeldenummer: EP9403353
(87) Internationale Veröffentlichungsnummer: WO9511999

(56) Entgegenhaltungen:
- EP-A- 0 320 763
- EP-A- 0 525 430
- DE-A- 3 934 474
- DE-B- 1 275 560
- DE-B- 1 959 713
- FR-A- 1 231 138
- US-A- 3 185 463

## Beschreibung

Die Erfindung betrifft ein Verfahren zum Glühen von Glühgut, nach dem Oberbegriff des unabhängigen Anspruches 1. Ferner betrifft die Erfindung einen derartigen Glühofen.

Die Oberflächenqualität des behandelten Glühgutes hängt unter anderem ab von der Reinheit des Schutzgases. Da das Schutzgas im Laufe der Glühbehandlung Verunreinigungen aufnimmt, wird es bisher, wie aus der Praxis bekannt, kontinuierlich abgezogen und durch frisches Schutzgas ersetzt. Das verbrauchte Schutzgas wird entsorgt. Dadurch treten erhebliche Verluste auf. Um diese in Grenzen zu halten, läßt man den Gasaustausch relativ langsam verlaufen und nimmt dafür eine verminderte Oberflächenqualität der Bleche in Kauf.

Aus der DE-B 1 959 713 ist ein gattungsgemäßes Verfahren zur Reinigung der Schutzgasatmosphäre eine Industrieofens bekannt, bei dem der freie Sauerstoff mit den reduzierenden Bestandteilen des Schutzgases H₂ und CO reagiert, und zwar mit Hilfe eines Katalysators. Die dabei entstehenden CO₂ und die H₂O-Anteile müssen in nachgeschalteten Verfahrensschritten aus dem Schutzgas entfernt werden, so daß das bekannte Verfahren verfahrenstechnisch aufwendig ist.

Der Erfindung liegt die Aufgabe zugrunde, hier Abhilfe zu schaffen und die Reinigung des Schutzgases von Sauerstoff auf eine einfache und kostengünstige Weise zu ermöglichen.

Zur Lösung dieser Aufgabe ist das Verfahren nach der Erfindung dadurch gekennzeichnet, daß dem heißen Schutzgas während der Reinigungsbehandlung durch Reaktionspartner in einer heißen Reaktionszone Sauerstoff entzogen wird, daß als Reaktionspartner Magnesium, Aluminium, Titan oder Silicium dienen, die eine höhere Affinität zu Sauerstoff haben, als bestimmte zu schützende Legierungselemente des Glühgutes, daß mit dem Sauerstoffentzug begonnen wird, wenn die Kerntemperatur des Glühgutes einen Wert erreicht hat, bei dem die Verdampfung der Walzölrückstände im wesentlichen abgeschlossen ist, wobei die Walzölrückstände von der heißen Reaktionszone ferngehalten werden.

Zu schützende Legierungselemente des Glühgutes sind vor allen Dingen Chrom und Mangan. Durch die Reaktion an Metallen wird der Taupunkt des Schutzgases soweit abgesenkt, daß keine Oxidation der leicht oxidierbaren Legierungsbestandteile des Glühgutes auftritt.

Es wurde gefunden, daß die Entfernung von Sauerstoff eine wesentliche Verbesserung der Oberflächenqualität des Glühgutes bewirkt. Insbesondere Mangan kann Rückstände auf der Materialoberfläche hervorrufen, die auch nach dem Lackieren noch sichtbar bleiben.

Mit dem Sauerstoffentzug wird vorzugsweise erst begonnen, wenn die Kerntemperatur einen Wert von 550 - 650 °C erreicht hat. Nach derzeitigen Erkenntnissen liegt das Optimum zwischen ca. 580 und 620 °C. Es ist wichtig, die Walzölrückstände von der heißen Reaktionszone fernzuhalten, da es sonst zu einer Verschmutzung der dort vorhandenen Reagenzien kommt. Diese verlieren dann ihre Wirksamkeit und müssen entsorgt werden. Sobald das Schutzgas im wesentlichen frei von Walzölrückständen ist, enthält es auch nur noch Reste von Wasserdampf.

Unter Kerntemperatur versteht man die im Zentrum des gewickelten Glühgutes herrschende Temperatur. Sie wird vorzugsweise berechnet oder aus der am unteren Rand des Glühgutes herrschenden Temperatur ermittelt.

Die heiße Reaktionszone kann über eine gesonderte Heizung verfügen. Vorteilhafter hingegen ist es, die heiße Reaktionszone durch das aufgeheizte Schutzgas aufzuheizen.

Der Durchsatz des Teilstroms kann vorteilhafterweise auf ein Vielfaches des freien Volumens des Glühraums, vorzugsweise auf 100 - 300 m³/h, eingestellt werden, da hiermit keine Schutzgasverluste verbunden sind. Es hat sich gezeigt, daß das gereinigte Schutzgas unter Umständen bessere Oberflächenergebnisse erzielt als frisches Schutzgas, insbesondere wenn letzteres nur in geringer Qualität zur Verfügung steht.

Vorteilhafterweise wird das Schutzgas gekühlt, woraufhin das sich bildende Kondensat aus Wasserdampf und Walzölrückständen ggf. zusammen mit Verunreinigungspartikeln abgeschieden wird. Verdampfungs- und Crackprodukte aus den Walzölrückständen bedeuten eine wesentliche Verschmutzung des Schutzgases, vor allen Dingen in der Aufheizphase. Durch zügiges Abtrennen des Kondensats, verbunden mit der Entfernung etwaiger Feststoffpartikel, kommt es zu einer raschen und intensiven Reinigung des Glühgutes, ohne daß die Verunreinigungen längere Zeit im Schutzgas verbleiben. Dabei wird das Schutzgas vorteilhafterweise auf unter 100 °C, bevorzugt auf unter 20 °C abgekühlt, da ersteres den nachgeschalteten Verdichter schützt und letzteres den Reinigungsvorgang zusätzlich erleichtert und beschleunigt.

Ferner wird in Weiterbildung der Erfindung vorgeschlagen, daß das Schutzgas gekühlt und durch Adsorption von unerwünschten Gasbestandteilen, insbesondere Wasserdampf und Methan, gereinigt wird. Der Adsorption dienen Füllstoffe, wie z. B. Zeolith. Das Schutzgas reichert sich insbesondere gegen Ende, vor allem während des letzten Drittes des Glühprozesses mit Methan an. Dementsprechend wird der auf Methan bezogene Adsorptionsprozeß insbesondere gegen Ende des Glühprozesses wirksam. Für die Kühltemperaturen gelten die obigen Ausführungen.
Das Adsorbens bedarf in aller Regel der Regeneration, wobei diese vorzugsweise durch Erwärmung und/oder Evakuierung durchgeführt wird.
Der Adsorptionsprozeß kann unabhängig von der Kondensatabscheidung durchgeführt oder mit dieser gekoppelt werden. Im letztgenannten Fall ist es besonders vorteilhaft, der Kondensatabscheidung und dem Adsorptionsprozeß einen gemeinsamen Kühlschritt vorzuschalten. Dies vermindert den apparatetechnischen Aufwand gegenüber den sonst doppelt erforderlichen Kühlaggregaten.

Ferner ist es vorteilhaft, das gekühlte Schutzgas ohne Vorwärmung zur Kühlung des Glühgutes zu verwenden. Die Teilstrom-Reinigung wird also am Ende des Glühprozesses in die dann erfolgende Kühlung des Glühgutes eingebunden.
Der Adsorptionsprozeß ist durchaus in der Lage, den gesamten Wasserdampf und die Walzölrückstände aufzunehmen. Sein Wirkungsgrad entspricht dem eines Kondensatabscheiders, der bei -70 °C arbeitet. Es kann also durchaus auf einen Kondensatabscheider verzichtet werden. Allerdings fällt dann ein erhöhter Regenerationsaufwand für den Adsorber an. Sinnvoll ist es daher, den Kondensatabscheider mit dem Adsorber zu koppeln, wobei letzterer vor allen Dingen zur Entfernung des Methans während der letzten Phase des Glühprozesses dient, in der Aufheizphase allerdings anfänglich auch noch einen Teil des Wasserdampfes übernimmt.

Der Prozeß der Kondensatentfernung und/oder der Adsorptionsprozeß können unabhängig vom Sauerstoffentzug durchgeführt werden. Wenn hingegen alle drei Prozesse zur Anwendung kommen, ergibt sich eine umfassende Verminderung der den Glühprozeß behindernden Bestandteile im Schutzgas. Der zusätzlich erforderliche apparatetechnische Aufwand wird durch die Einsparung an Schutzgas und vor allen Dingen durch die höhere Oberflächenqualität des Glühgutes mehr als kompensiert. Je nach Qualitätsanforderungen kann auf einen oder zwei der Reinigungsschritte verzichtet werden.

Die Erfindung schafft ferner einen Glühofen zum Glühen von Glühgut, insbesondere von Stahlblechen, in einem Glühraum unter Schutzgas, mit einer an den Glühraum angeschlossenen Teilstrom-Reinigungseinrichtung für das Schutzgas zur Durchführung des Verfahrens nach einem der Verfahrensansprüche, gekennzeichnet durch eine heiße Reaktionskammer zum Entfernen von Sauerstoff durch Reaktionspartner aus dem Schutzgas, wobei die Reaktionskammer Magnesium, Aluminium, Titan oder Silicium enthält, welche eine höhere Affinität zu Sauerstoff haben als bestimmte zu schützende Legierungsbestandteile des Glühgutes.

Diese Vorrichtung bietet die Möglichkeit, Sauerstoff im Schutzgas so stark zu reduzieren, daß keine Beeinträchtigung der Oberflächenqualität des Glühgutes auftritt. Dabei wird das Schutzgas rezirkuliert, so daß es nicht zu wesentlichen Verlusten kommt.

Es ist vorteilhaft, die heiße Reaktionskammer mit einer Zusatzheizung zu versehen, sofern das Schutzgas alleine nicht ausreicht, diese Reaktionskammer ausreichend schnell und hoch aufzuheizen bzw. auf Temperatur zu halten.

Die Erfindung ist ferner gekennzeichnet durch einen Wärmetauscher zum Kühlen des Schutzgases, dem ein Kondensatabscheider und/oder eine kalte Reaktionskammer zum adsorbieren unerwünschter Gasbestandteile insbesondere Wasserdampf und Methan nachgeschaltet sind.

Verdampfungs- und Crackprodukte aus Walzölrückständen und weitere störende Gase im Schutzgas werden so stark reduziert, daß keine Beeinträchtigung der Oberflächenqualität des Glühgutes mehr auftritt.

Vorzugsweise ist die kalte Reaktionskammer zu Regenerationszwecken mit einer Heizung und/oder einer Vakuumpumpe versehen.

Dem Wärmetauscher wird vorteilhafterweise ein Kältemittelkühler nachgeschaltet, um die Schutzgastemperatur weiter herabzusenken und dadurch den Abscheidevorgang zu fördern.

Als erfindungswesentlich offenbart gelten auch solche Kombinationen der erfindungsgemäßen Merkmale, die von den vorstehend diskutierten Verknüpfungen abweichen.

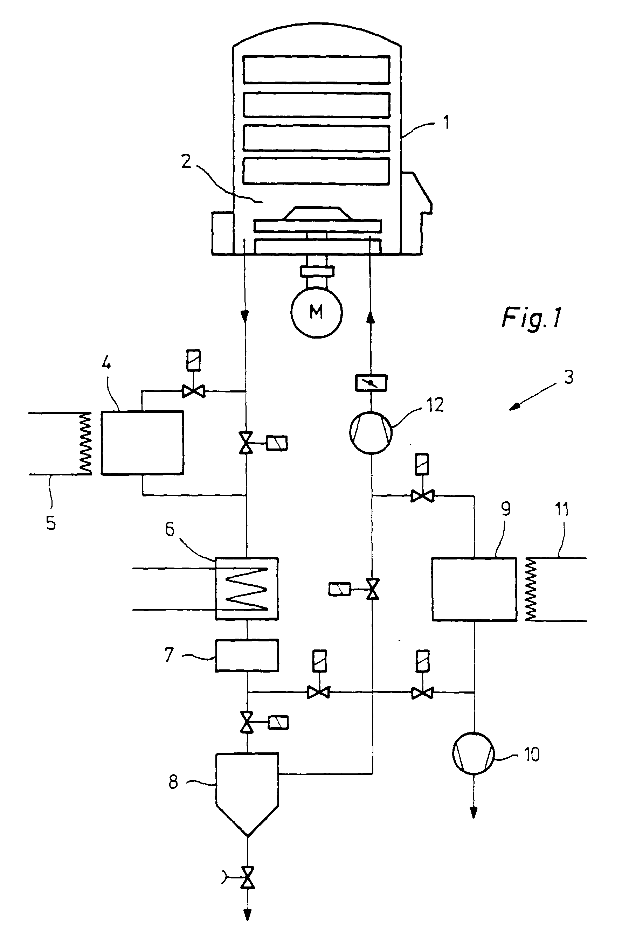

Die Erfindung wird im folgenden anhand eines bevorzugten Ausführungsbeispiels im Zusammenhang mit der beiliegenden Zeichnung näher erläutert. Die Zeichnung zeigt in schematischer Darstellung einen Glühofen nach der Erfindung.

Der Glühofen 1 weist eine unter Schutzgas arbeitende Glühkammer 2 auf, die an eine Teilstrom-Reinigungseinrichtung 3 angeschlossen ist. Letztere umfaßt eine heiße Reaktionskammer 4, die Materialien enthält, welche eine höhere Affinität zu Sauerstoff haben als bestimmte, zu schützende Legierungselemente des Glühguts, wie etwa Chrom und Mangan. Bei den in der Reaktionskammer 4 enthaltenen Materialien handelt es sich vorzugsweise um Metalle, wie etwa Magnesium, Aluminium, Titan oder Silicium. Diese Materialien reagieren mit dem Sauerstoff des Schutzgases, wodurch dessen Taupunkt soweit abgesenkt wird, daß eine Oxidation der leicht oxidierbaren Bestandteile des Glühguts nicht mehr in störendem Maße auftritt. Die Reaktionskammer 4 wird durch das heiße Schutzgas aufgeheizt. Sie kann ferner mit einer Zusatzheizung 5 versehen sein.

Die Teilstrom-Reinigungseinrichtung 3 weist außerdem einen Gas-Wasser-Wärmetauscher 6 auf, dem ein vorzugsweise mit flüssigem N₂ betriebener Kältemittelkühler 7 nachgeschaltet ist. Beide Aggregate gemeinsam kühlen das Schutzgas auf unter 20°C. Sodann können in einem Kondensatabscheider 8, z.B. in einem Zyklon, die Verdampfungs- und Crackprodukte aus den Walzölrückständen sowie das kondensierte Wasser abgeschieden werden. Diese Verunreinigungen können also nicht mehr dazu beitragen, die Oberflächenqualität des Glühgutes zu beeinträchtigen.

Zur Teilstrom-Reinigungseinrichtung 3 gehört ferner eine kalte Reaktionskammer 9, die ein Adsorbens, insbesondere Zeolith, für störende Gase, wie etwa Wasserdampf oder Methan, enthält. Die Gase lagern sich am Zeolith an, woraus eine weitere Erhöhung der Oberflächenqualität des Glühgutes resultiert. Zur Regeneration des Zeoliths kann die Reaktionskammer 9 evakuiert werden, und zwar über eine entsprechende Vakuumpumpe 10. Ferner besteht die Möglichkeit, die Regeneration durch Aufheizen der Reaktionskammer 9 zu bewirken. Hierzu ist eine Heizung 11 vorgesehen.

Ein Verdichter 12 fördert das gereinigte Schutzgas mit dem erforderlichen Druck in den Glühraum 2 des Glühofens 1 zurück.

Wie in der Zeichnung dargestellt, ist ein umfangreiches System von im einzelnen nicht näher erläuterten Magnetventilen vorgesehen, um die Teilstrom-Reinigungseinrichtung entsprechend den jeweiligen Betriebsbedingungen zu steuern.

Während der Aufheizphase des Glühgutes wird die Reaktionskammer 4 umgangen, damit keine Verschmutzung durch die Verdampfungs- und Crackprodukte aus den Walzölrückständen und kein zu rascher Verbrauch der Reagenzien durch den aus dem wasserdampf stammenden Sauerstoff auftreten. Die Abscheidung erfolgt im Kondensatabscheider 8. Dies geschieht in der Anfangsphase des Glühprozesses. Zu Beginn des Aufheizens wird auch die kalte Reaktionskammer 9 mit Wasserdampf und Öldämpfen beaufschlagt.

Sobald die Walzölrückstände und der Wasserdampf im wesentlichen entfernt sind, kann die heiße Reaktionskammer 4 zugeschaltet werden. Ihr Betrieb setzt allerdings im vorliegenden Fall voraus, daß die Kerntemperatur mindestens ca. 550°C beträgt. Sollte dies noch nicht der Fall sein oder sollte die vom Schutzgas gelieferte Wärme für den Betrieb der heißen Reaktionskammer 4 nicht ausreichen, kann das Wärmedefizit von der Zusatzheizung 5 geliefert werden.

Insbesondere während des letzten Drittels des Glühprozesses reichert sich das Schutzgas mit Methan an. Dieses wird in der kalten Reaktionskammer 9 adsorbiert. Während der vorhergehenden mittleren Phase des Glühprozesses kann die kalte Reaktionskammer 9 also ggf. umgangen werden. Diese Zeitspanne dient der Regeneration des Adsorbens, sei es mittels der Vakuumpumpe 10, sei es mittels der Heizung 11.

Das System von Magnetventilen kann ferner dazu dienen, einzelne Reinigungsaggregate völlig abzuschalten, sofern geringere Anforderungen an die Oberflächenqualität des Glühgutes dies zulassen. So kann beispielsweise auf die kalte Reaktionskammer verzichtet werden. Das Schutzgas strömt dann vom Kondensatabscheider 8 direkt zum Verdichter 12. Gleichermaßen kann nur mit der kalten Reaktionskammer 9 bzw. nur mit dem Kondensatabscheider 8 gearbeitet werden, obwohl die Zuschaltung der heißen Reaktionskammer 4 wesentliche Vorteile mit sich bringt.

Im Rahmen der Erfindung sind durchaus Abwandlungsmöglichkeiten gegeben. So kann auf den Kältemittelkühler 7 verzichtet werden, wobei dann allerdings die Temperatur des Schutzgases nicht unter 20°C sinken wird. Sofern feststeht, daß nicht sämtliche Aggregate der Teilstrom-Reinigungseinrichtung benötigt werden, kann die Anlage auch auf diejenigen Aggregate abgemagert werden, die betrieben werden sollen. Unter allen Umständen benötigt man den Verdichter, den Kondensatabscheider und den Wärmetauscher.

## Patentansprüche

1. Verfahren zum Glühen von Glühgut, insbesondere von Stahlblechen, in einem Glühraum (2) eines Glühofens (1) unter Schutzgas, wobei ein Teilstrom des Schutzgases aus dem Glühraum (2) des Glühofens herausgeführt, einer Reinigungsbehandlung unterworfen und sodann in den Glühraum zurückgefördert wird, dadurch gekennzeichnet, dem heißen Schutzgas während der Reinigungsbehandlung durch Reaktionspartner in einer heißen Reaktionszone (4) Sauerstoff entzogen wird, daß als Reaktionspartner Magnesium, Aluminium, Titan oder Silicium dienen, die eine höhere Affinität zu Sauerstoff haben als bestimmte zu schützende Legierungselemente des Glühgutes, daß mit dem Sauerstoffentzug begonnen wird, wenn die Kerntemperatur des Glühgutes einen Wert erreicht hat, bei dem die Verdampfung der Walzölrückstände im wesentlichen abgeschlossen ist, wobei die Walzölrückstände von der heißen Reaktionszone ferngehalten werden.

2. Verfahren nach Anspruch 1,
dadurch gekennzeichnet, daß mit dem Sauerstoffentzug begonnen wird, wenn die Kerntemperatur einen Wert von 550 bis 650 °C erreicht hat.

3. Verfahren nach Anspruch 1 oder 2,
dadurch gekennzeichnet, daß die Kerntemperatur berechnet oder aus der am unteren Rand des Glühgutes herrschenden Temperatur ermittelt wird.

4. Verfahren nach einem der Ansprüche 1-3,
dadurch gekennzeichnet, daß die heiße Reaktionszone (4) durch das heiße Schutzgas aufgeheizt wird.

5. Verfahren nach einem der Ansprüche 1-4,
dadurch gekennzeichnet, daß der Durchsatz des Teilstroms ein Vielfaches des freien Volumens des Glühraums beträgt, vorzugsweise 100 bis 300 m³/h.

6. Verfahren nach einem der Ansprüche 1-5,
dadurch gekennzeichnet, daß das Schutzgas gekühlt wird, woraufhin das sich bildende Kondensat aus Wasserdampf und Walzölrückständen ggf. zusammen mit Verunreinigungspartikel abgeschieden wird.

7. Verfahren nach einem der Ansprüche 1-6,
dadurch gekennzeichnet, daß das Schutzgas gekühlt und durch Adsorption von unerwünschten Gasbestandteilen, insbesondere Wasserdampf und Methan, gereinigt wird.

8. Verfahren nach Anspruch 7,
dadurch gekennzeichnet, daß das Adsorbens durch Erwärmung und/oder Evakuierung regeneriert wird.

9. Verfahren nach einem der Ansprüche 6-8,
dadurch gekennzeichnet, daß das Schutzgas auf unter 100 °C, vorzugsweise unter 20 °C abgekühlt wird.

10. Verfahren nach einem der Ansprüche 6-9,
dadurch gekennzeichnet, daß der Kondensationsabscheidung und dem Adsorptionsprozeß ein gemeinsamer Kühlschritt vorgeschaltet ist.

11. Verfahren nach einem der Ansprüche 6-10,
dadurch gekennzeichnet, daß das gekühlte Schutzgas ohne Vorwärmung zur Kühlung des Glühgutes verwendet wird.

12. Glühofen zum Glühen von Glühgut, insbesondere von Stahlblechen, in einem Glühraum unter Schutzgas, mit einer an den Glühraum (2) angeschlossenen Teilstrom-Reinigungseinrichtung (3) für das Schutzgas zur Durchführung des Verfahrens nach einem der Ansprüche 1 bis 11, gekennzeichnet durch eine im Bypass zuschaltbare heiße Reaktionskammer (4), zum Entfernen von Sauerstoff durch Reaktionspartner aus dem Schutzgas, wobei die Reaktionskammer Magnesium, Aluminium, Titan oder Silicium enthält, welche eine höhere Affinität zu Sauerstoff haben als bestimmte zu schützende Legierungselemente des Glühgutes.

13. Glühofen nach Anspruch 12,
dadurch gekennzeichnet, daß die heiße Reaktionskammer (4) eine Zusatzheizung (5) aufweist.

14. Glühofen nach einem der Ansprüche 12 oder 13,
gekennzeichnet durch einen Wärmetauscher (6) zum Kühlen des Schutzgases, dem ein Kondensatabscheider (8) und/oder eine kalte Reaktionskammer (9) zum Adsorbieren unerwünschter Gasbestandteile, insbesondere Wasserdampf und Methan, nachgeschaltet sind.

15. Glühofen nach Anspruch 14,
dadurch gekennzeichnet, daß die kalte Reaktionskammer (9) zu Regenerationszwecken mit einer Heizung (11) und/oder einer Vakuumpumpe (10) versehen ist.

16. Glühofen nach Anspruch 14 oder 15,
dadurch gekennzeichnet, daß dem Wärmetauscher (6) ein Kältemittelkühler (7) nachgeschaltet ist.

## Claims

1. Process for annealing an annealing charge, in particular sheet steel, in an annealing chamber (2) of an annealing furnace (1 ) under a protective gas atmosphere, a partial stream of the protective gas being passed out of the annealing chamber (2) of the annealing furnace, subjected to a cleaning treatment and then returned to the annealing chamber, characterised in that oxygen is removed from the hot protective gas during the cleaning treatment by reactants in a hot reaction zone (4), that magnesium, aluminium, titanium or silicon, which have a higher affinity to oxygen than certain alloying elements of the annealing charge to be protected, serve as reactants, that removal of the oxygen is commenced when the core temperature of the annealing charge has reached a value at which the evaporation of the rolling oil residues is essentially complete, the rolling oil residues being kept away from the hot reaction zone.

2. Process according to claim 1,
characterised in that removal of the oxygen is commenced when the core temperature has reached a value of 550 to 650 °C.

3. Process according to claim 1 or 2,
characterised in that the core temperature is calculated or determined from the temperature prevailing at the bottom edge of the annealing charge.

4. Process according to any one of claims 1 through 3,
characterised in that the hot reaction zone (4) is heated by the hot protective gas.

5. Process according to any one of claims 1 through 4,
characterised in that the throughput of the partial stream is many times the free volume of the annealing chamber, preferably 100 to 300 m³/h.

6. Process according to any one of claims 1 through 5,
characterised in that the protective gas is cooled and the condensate forming from water vapour and rolling oil residues, possibly together with contaminating particles, is separated.

7. Process according to any one of claims 1 through 6,
characterised in that the protective gas is cooled and cleaned by adsorption of undesirable gas components, in particular water vapour and methane.

8. Process according to claim 7,
characterised in that the adsorbent is regenerated by heating and/or evacuation.

9. Process according to any one of claims 6 through 8,
characterised in that the protective gas is cooled to below 100 °C, preferably below 20 °C.

10. Process according to any one of claims 6 through 9,
characterised in that a common cooling step is provided upstream of the condensation separation and the adsorption process.

11. Process according to any one of claims 6 through 10,
characterised in that the cooled protective gas is used without preheating to cool the annealing charge.

12. Annealing furnace for annealing an annealing charge, in particular sheet steel, in an annealing chamber under a protective gas atmosphere, with a partial-stream cleaning device (3) for the protective gas connected to the annealing chamber (2) for performing the process according to any one of claims 1 through 11, characterised by a hot reaction chamber (4) which can be switched on in the bypass to remove oxygen from the protective gas by reactants, the reaction chamber containing magnesium, aluminium, titanium or silicon which have a higher affinity to oxygen than certain alloying elements of the annealing charge to be protected.

13. Annealing furnace according to claim 12,
characterised in that the hot reaction chamber (4) is provided with an additional heating device (5).

14. Annealing furnace according to either claim 12 or 13,
characterised by a heat exchanger (6) for cooling the protective gas, downstream of which a condensate separator (8) and/or a cold reaction chamber (9) are arranged for absorbing undesirable gas components, in particular water vapour and methane.

15. Annealing furnace according to claim 14,
characterised in that the cold reaction chamber (9) is provided, for regeneration purposes, with a heating device (11) and/or a vacuum pump (10).

16. Annealing furnace according to claim 14 or 15,
characterised in that a refrigeration cooler (7) is arranged downstream of the heat exchanger (6).

## Revendications

1. Procédé de recuit de produits à recuire, plus particulièrement de tôles d'acier, dans une enceinte de recuit (2) d'un four à recuire (1), où un flux partiel du gaz de protection est d'abord sorti de l'enceinte de recuit (2), ensuite soumis à un traitement de nettoyage et enfin ramené dans l'enceinte de recuit, caractérisé par le fait que, lors du traitement de nettoyage dans une zone de réaction (4) chaude, de l'oxygène est extrait du gaz de protection chaud par de partenaires réactionnels, que du magnésium, de l'aluminium, du titane ou du silicium, ayant une affinité pour l'oxygène plus élevée que certains éléments d'alliage à protéger du produit à recuire, servent comme partenaires réactionnels, et que l'extraction de l'oxygène commence quand la température de noyau du produit à recuire a atteint une valeur où la vaporisation des résidus de l'huile de laminage est essentiellement achevée, les résidus de l'huile de laminage étant maintenus en dehors de la zone de réaction chaude.

2. Procédé selon la revendication 1, caractérisé par le fait que l'extraction de l'oxygène commence quand la température de noyau a atteint une valeur de 550 à 650°C.

3. Procédé selon l'une des revendications 1 ou 2, caractérisé par le fait que la température de noyau est soit calculée soit déterminée à partir de la température régnant au bord inférieur du produit à recuire.

4. Procédé selon l'une des revendications 1 à 3, caractérisé par le fait que la zone de réaction (4) chaude est chauffée par le gaz de protection chaud.

5. Procédé selon l'une des revendications 1 à 4, caractérisé par le fait que le débit du flux partiel s'élève à un multiple du volume libre de l'enceinte de recuit, de préférence de 100 à 300 m³/h.

6. Procédé selon l'une des revendications 1 à 5, caractérisé par le fait que le gaz de protection est refroidi, après quoi le condensat se formant de vapeur d'eau et de résidus d'huile de laminage est séparé, le cas échéant avec des impuretés.

7. Procédé selon l'une des revendications 1 à 6, caractérisé par le fait que le gaz de protection est refroidi et nettoyé par adsorption de constituants de gaz non désirés, plus particulièrement de vapeur d'eau et de méthane.

8. Procédé selon la revendication 7, caractérisé par le fait que l'adsorbant est régénéré par chauffage et/ou évacuation.

9. Procédé selon l'une des revendications 6 à 8, caractérisé par le fait que le gaz de protection est refroidi à une valeur inférieure à 100°C, de préférence inférieure à 20°C.

10. Procédé selon l'une des revendications 6 à 9, caractérisé par le fait qu'une étape de refroidissement commune est placée en amont de la séparation de condensat et du processus d'adsorption.

11. Procédé selon l'une des revendications 6 à 10, caractérisé par le fait que le gaz de protection refroidi est utilisé sans préchauffage pour le refroidissement du produit à recuire.

12. Four à recuire pour le recuit de produits à recuire, plus particulièrement de tôles d'acier, dans une enceinte de recuit sous gaz de protection, avec un dispositif de nettoyage d'un flux partiel (3) du gaz de protection, raccordé à l'enceinte de recuit, pour la réalisation du procédé selon les revendications 1 à 11, caractérisé par une chambre de réaction (4) chaude, pouvant être mise en circuit dans le bipasse, pour l'extraction d'oxygène du gaz de protection à l'aide de partenaires réactionnels, la chambre de réaction contenant du magnésium, de l'aluminium, du titane ou du silicium ayant une affinité pour l'oxygène plus élevée que certains éléments d'alliage à protéger du produit à recuire.

13. Four à recuire selon la revendication 12, caractérisé par le fait que la chambre de réaction (4) chaude présente un chauffage d'appoint (5).

14. Four à recuire selon l'une des revendications 12 ou 13, caractérisé par un échangeur de chaleur (6) pour le refroidissement du gaz de protection et en aval duquel sont disposés un séparateur de condensat (8) et/ou une chambre de réaction (9) froide pour l'adsorption de constituants de gaz non désirés, plus particulièrement de la vapeur d'eau et du méthane.

15. Four à recuire selon la revendication 14, caractérisé par le fait que la chambre de réaction (9) froide est munie d'un chauffage (11) et/ou d'une pompe à vide (10) à des fins de régénération.

16. Four à recuire selon l'une des revendications 14 ou 15, caractérisé par le fait qu'un refroidisseur de fluide frigorigène (7) est disposé en aval de l'échangeur de chaleur (6).
